Europäisches Patentamt

European Patent Office

Office européen des brevets

(11) Veröffentlichungsnummer: **0 011 709**
**B1**

(12) **EUROPÄISCHE PATENTSCHRIFT**

(45) Veröffentlichungstag der Patentschrift:
23.06.82

(21) Anmeldenummer: **79104112.2**

(22) Anmeldetag: **23.10.79**

(51) Int. Cl.³: **G 02 B 21/10**

(30) Priorität: **02.12.78 DE 2852203**

(43) Veröffentlichungstag der Anmeldung:
**11.06.80 Patentblatt 80/12**

(45) Bekanntmachung des Hinweises auf die Patenterteilung:
**23.06.82 Patentblatt 82/25**

(84) Benannte Vertragsstaaten:
**DE FR GB**

(56) Entgegenhaltungen:
**CH-A-564 786**
**DD-A-34 024**
**DE-A-1 622 989**
**DE-A-2 301 597**
**DE-B-2 211 702**
**FR-A-2 036 206**

(73) Patentinhaber: **International Business Machines
Corporation, Armonk, N.Y. 10504 (US)**

(72) Erfinder: **Wagner, Dietmar, Ludwig-Finck-Strasse 8,
D-7032 Sindelfingen-Maichingen (DE)**

(74) Vertreter: **Teufel, Fritz, Dipl.-Phys., Schönaicher
Strasse 220, D-7030 Böblingen (DE)**

(54) **Lichtleiteinrichtung zur Auflichtbeleuchtung.**

Lichtleiteinrichtung zur Auflichtbeleuchtung

Die Erfindung betrifft eine Lichtleiteinrichtung nach dem Oberbegriff des Hauptanspruchs, Verfahren zum Betrieb dieser Einrichtung, Mikroskope mit dieser Einrichtung und die Verwendung dieser Mikroskope.

Lichtleiteinrichtungen zur Beleuchtung von Objektiven in der Mikroskopie sind im Stand der Technik in großer Zahl bekannt.

Bei der Dunkelfeldbeleuchtung mit Innenlicht nach Köhler wird ein senkrecht zur optischen Achse eines Mikroskops verlaufendes Lichtbündel über ein unter 45° angeordnetes Glasplättchen oder ein Halbwinkelprisma so umgelenkt, daß es parallel zur optischen Achse des Mikroskops über eine durchbohrte Linse oder eine Ringlinse und einen Hohlspiegel auf das Objekt fällt. Derartige Vorrichtungen werden beispielsweise in dem Buch »Optik für Konstrukteure«, von H. Naumann, W. Knapp, Düsseldorf 1960, insbesondere 128 ff. beschrieben. Neben den durch die den Beleuchtungslichtstrahl einspiegelnden Elemente bedingten, selbst mit hohem konstruktivem Aufwand nicht ganz vermeidbaren Störungen, wie Erzeugung von Hellfeldbeleuchtungs-Komponenten und Bildfehlern, weisen die obengenannten Beleuchtungsvorrichtungen noch den Nachteil auf, daß für jede Objektiveinstellung eine besondere Justierung des Beleuchtungsstrahlenganges erforderlich ist. Das gleiche gilt für Dunkelfeldbeleuchtung mit Außenlicht.

Beide Beleuchtungsvorrichtungen erfordern zudem teure, komplizierte und viel Platz beanspruchende Einrichtungen, die nachträglich, wenn überhaupt, nur schwer in ein vorhandenes Mikroskop eingebaut werden können. In der DE-A-2 542 075 wird eine Auflicht-Dunkelfeld-Beleuchtungsvorrichtung beschrieben, bei der der seitlich zugeführte Beleuchtungsstrahl mit Hilfe eines besonderen optischen Elements eine zylinderförmige Intensitätsverteilung erhält und über ein unter 45° zur Mikroskopachse geneigtes und aus einem äußeren ringförmigen, vollverspiegelten und einen inneren teilverspiegelten Bereich bestehendes Ablenkelement über eine Ringlinse und einen Objektivspiegel auf das zu belichtende Objekt gerichtet wird. Durch den vollverspiegelten ringförmigen äußeren Bereich des Umlenkelements wird die Helligkeit im Bereich des zu beleuchtenden Objekts zwar erhöht, die anderen, mit derartigen Elementen verbundenen Fehler, beispielsweise Erzeugung von unerwünschten Hellfeldkomponenten und Abbildungsfehlern, können mit dieser Vorrichtung ebenfalls nicht vermieden werden. Abgesehen von der Kompliziertheit der erforderlichen Apparaturen, weisen beide Vorrichtungen den Nachteil auf, daß die optischen Weglängen der Beleuchtungsstrahlen asymmetrisch um die optische Achse des Mikroskops verteilt sind, was zu einer asymmetrischen Verteilung der Auftreffwinkel der Dunkelfeldbeleuchtung auf die Objektebene führt. Trotz genauester Einjustierung des Beleuchtungsstrahlenganges auf die jeweilige Mikroskopeinstellung läßt sich in vielen Fällen ein gewisser, sehr störender Hellfeldanteil und eine Asymmetrie der Beleuchtung nicht vermeiden.

In der DE-B-2 222 378 wird eine für ophtalmoskopische Zwecke dienende Vorrichtung zur Beleuchtung der Netzhaut mit Hilfe von am Rand einer Beobachtungslinse ringförmig angeordneten Lichtleitern beschrieben, durch die eine möglichst homogene Ausleuchtung der Netzhaut erfolgt, die, wie sich insbesondere aus den Fig. 4 und 6 ergibt, im wesentlichen eine Hellfeldbeleuchtung darstellt.

In der DE-B-2 211 702 wird eine faseroptische Beleuchtungsvorrichtung beschrieben, in der der Beobachtungsstrahlengang von in einem ringförmig und konzentrisch zu ihm angeordneten, die Beleuchtungsstrahlung übertragenden Lichtleitfasern umgeben ist. Auch bei dieser Vorrichtung handelt es sich im wesentlichen um eine Hellfeldbeleuchtungsvorrichtung, bei der die Beleuchtungsstrahlung von außerhalb der Objektivlinse auf die Objektebene zur Einwirkung gebracht wird. Weitere Lichtleiteinrichtungen dieser Art für Auflicht-Beleuchtung bei Mikroskopen sind in den deutschen Offenlegungsschriften 1 622 989 und 2 301 597 beschrieben.

Die vorliegende Erfindung stellt sich somit die Aufgabe, eine Lichtleiteinrichtung der eingangs genannten Art anzugeben, die mit einfachen Mitteln herzustellen und leicht zu justieren ist; sie soll außerdem so flexibel betrieben werden können, daß sie sowohl eine ausgezeichnete Dunkelfeldbeleuchtung als auch einen kontinuierlichen Übergang von Dunkelfeld- zu Hellfeldbeleuchtung ermöglicht und auch zur Registrierung von Licht verwendet werden kann, das vom Objekt ausgeht. Mikroskope sollen mit einer derartigen Lichtleiteinrichtung in einfacher Weise auszustatten sein und als Kantenfinder eingesetzt werden können.

Diese Aufgabe wird durch die in den Ansprüchen 1, 5 bis 7, 9, 12 und 13 gekennzeichnete Erfindung gelöst; Ausgestaltungen der Erfindung sind in den Unteransprüchen gekennzeichnet.

Gegenüber den bekannten Lichtleiteinrichtungen hat die Erfindung den Vorteil, sehr billig, konstruktiv äußerst einfach, extrem raumsparend und unempfindlich gegen Störungen zu sein und selbst bei unterschiedlichsten Anwendungsgebieten keinerlei Justagen erforderlich zu machen.

Da jedes von einem beliebigen Punkt einer in der Brennebene eines optischen Elements liegenden flächenhaften Lichtquelle ausgehende, im allgemeinen divergente Strahlenbündel

2

beim Durchtritt durch das Element in ein streng paralleles Lichtbündel umgewandelt wird, wird durch die in der rückwärtigen Brennebene eines Objektivs angeordnete ringförmige emittierende Lichtfläche eine Vielzahl von Parallel-Lichtbündeln erzeugt, die unter gleichen Auftreffwinkeln jedoch verschiedenen Azimutwinkeln auf die Objektebene fallen. Auf diese Weise wird sichergestellt, daß das gesamte Gesichtsfeld des Mikroskopobjektivs extrem gleichmäßig ausgeleuchtet wird und daß unabhängig von der jeweiligen Einstellung des Mikroskopobjektivs keinerlei Hellfeldkomponenten auftreten können. Werden extrem hohe Anforderungen an die Einhaltung eines bestimmten Einfallswinkels aller die Dunkelfeldbeleuchtung bewirkenden Strahlen gestellt, so muß der lichtemittierende ringförmige Bereich entsprechend schmal gemacht werden. Ist hingegen ein bestimmter Bereich der Einfallswinkel zulässig oder gar erforderlich, kann die Breite des genannten lichtemittierenden ringförmigen Bereiches entsprechend vergrößert werden, was beispielsweise durch eine Irisblende, durch Auswechseln der die lichtemittierenden ringförmigen Bereiche aufweisenden Vorrichtung oder durch steuerbares Zuschalten weiterer Lichtleitergruppen bewerkstelligt werden kann. Es kann aber auch zweckmäßig sein, einzelne, beispielsweise einander diametral gegenüberliegende Teile des lichtemittierenden ringförmigen Bereiches anzusteuern, so daß eine Dunkelfeldbeleuchtung mit nur aus einer, zwei oder mehr Richtungen einfallender Strahlung erzeugt wird, was beispielsweise bei der Auffindung von sich nur in einer vorgegebenen Richtung erstreckenden Strukturen vorteilhaft sein kann. Derartige Aufgaben treten beispielsweise bei der Ausrichtung von bei der Herstellung von integrierten Schaltungen verwendeten Belichtungsmasken auf, deren Strukturen sich überwiegend oder ausschließlich in zwei zueinander senkrechten Richtungen erstrecken, während die im Ausrichtmikroskop sichtbar zu machenden Ausrichtmarkierungen unter einem Winkel von 45° zur Richtung der zu übertragenden Strukturen angeordnet sind.

Da bei der Untersuchung und der Analyse von Kantenformen eine Beleuchtungsvorrichtung erforderlich ist, mit der eine Beleuchtung aus verschiedenen Richtungen und unter verschiedenen Einfallswinkeln erzeugt werden kann, eignet sich die vorliegende Erfindung, mit der sowohl der Azimutwinkel, der Einfallswinkel sowie der Winkel des Kegels in dem die Einfallsrichtungen einer gleichzeitig mehrere Einfallswinkel aufweisenden Strahlung liegen, verändert werden können, besonders gut zur Durchführung von Aufgaben der obengenannten Art. Durch die ebenfalls vorgesehene Möglichkeit, den ringförmigen lichtemittierenden Bereich entlang der optischen Achse zu verschieben, ist es weiterhin möglich, kontinuierlich von einer Dunkelfeldbeleuchtung zu einer Hellfeldbeleuchtung und umgekehrt, überzugehen. Die Anwendung der vorliegenden Erfindung ist nicht nur auf Mikroskope beschränkt; sie kann vielmehr im Zusammenhang mit einer Reihe anderer Abtast- und Beobachtungsgeräte mit besonderem Vorteil verwendet werden. So eignet sich die Lichtleiteinrichtung besonders gut zur Auffindung und Entdeckung von Kanten, Unebenheiten oder sonstigen Störungen der Homogenität einer Fläche, wobei es erforderlichenfalls auch möglich ist, die Beleuchtung über den zentralen Teil der Objektivlinse und die Lichtabnahme über die im Randbereich des Aperaturkegels dieser Linse angeordneten Lichtleiter vorzunehmen. Auch in diesem Fall kann durch Verbinden nur einzelner Sektoren mit einem Lichtdetektor eine Vorzugsrichtung für die Beobachtung festgelegt werden.

Ein Ausführungsbeispiel der Erfindung wird anschließend anhand der Figuren näher erläutert. Es zeigt

Fig. 1 eine Schnittansicht durch ein Mikroskop mit der erfindungsgemäßen Beleuchtungsvorrichtung,

Fig. 2 eine Schnittansicht durch die in Fig. 1 dargestellte Vorrichtung entlang der Linie A ... A.

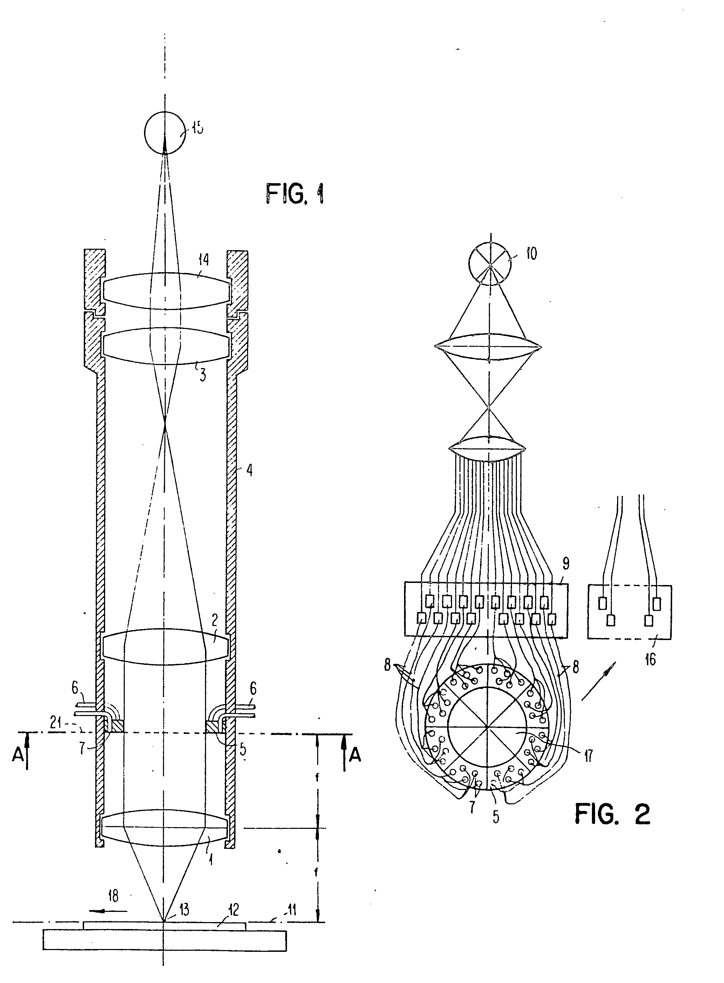

Die in Fig. 1 dargestellte Vorrichtung besteht aus einem Mikroskoptubus 4, in dem ein Objektiv 1, eine Tubuslinse 2 und ein Okular 3 befestigt sind. Oberhalb des Okulars 3 ist ferner eine Kondensorlinse 14 vorgesehen, durch die von einer im Bereich 15 angeordneten punktförmigen Lichtquelle ausgehende divergente Strahlen parallelgerichtet bzw. das Okular 3 verlassende parallele Strahlen in 15 fokussiert werden. In der Brennebene 21 des Objektivs 1 ist im Tubus 4 eine Vorrichtung 5 angeordnet, die aus einer Vielzahl von in einem ringförmigen Bereich angeordneten Endflächen 7 von vorzugsweise als Glasfasern oder Glasfaserbündeln ausgebildeten Lichtleitern 6 liegen. Die Vorrichtung kann beispielsweise aus einem Kunststoffring mit einer entsprechenden Anzahl von ringförmig angeordneten Löchern bestehen, in denen die einzelnen Lichtleiter 6 befestigt sind. Es ist aber auch möglich, eine entsprechende Anzahl von Lichtleitern 6 in der dargestellten Weise ringförmig anzuordnen und durch ein geeignetes Mittel miteinander zu verkitten. Die in der Vorrichtung 5 zusammengefaßten Lichtleiter 6 sind, beispielsweise wie in Fig. 2 dargestellt, in acht Sektoren 17 sowie in innere und äußere Ringsegmente unterteilt. Wie in Fig. 2 schematisch dargestellt, sind die Lichtleiter jedes inneren und jedes äußeren Ringabschnitts eines Sektors zu Lichtleiterbündeln 8 zusammengefaßt, die über geeignete, zu einer Gruppe 9 zusammengefaßte Lichtschalter mit einer Lichtquelle 10 einzeln oder in beliebigen Kombinationen verbindbar sind. Es ist selbstverständlich auch möglich, jeden einzelnen Sektor und jeden einzelnen Ring jeweils mit einer besonderen, einzeln erregbaren Lichtquelle zu verbinden.

Sind sämtliche Lichtleiter 6 mit der Lichtquelle 10 verbunden, so entsteht in der hinteren Brennebene 21 des Objektivs 1 eine ringförmige Lichtverteilung, die dazu führt, daß aus dem Objektiv 1 eine Vielzahl von praktisch nur aus parallelen Lichtstrahlen bestehenden Strahlenbündeln austritt, die auf die in der vorderen Brennebene 11 des Objektivs liegende Objektebene 12 unter gleichen Einfallswinkeln, jedoch unter verschiedenen Azimutwinkeln auftreffen. Ein bei Abwesenheit der Kondensorlinse 14 hinter dem Okular 3 angeordneter Beobachter sieht bei einer störungsfreien Objektfläche praktisch keinerlei Licht, während jede eine Streuung oder eine seitliche Reflexion des Lichtes bewirkende Störung der Objektfläche 12 ein Sichtbarwerden von Licht bewirkt. Ein in Anwesenheit der Kondensorlinse 14, in deren Brennpunkt bei 15, angeordneter Lichtdetektor wird in diesem Fall das Vorliegen von Licht anzeigen. Wird hingegen in der Brennebene der Kondensorlinse 14 bei 15 eine punktförmige Lichtquelle angeordnet, so wird das das Objektiv 1 durchsetzende Licht im Punkt 13 auf der Objektfläche 12 zu einem Airy-Scheibchen fokussiert. Bei störungsfreier Objektfläche 12 wird das gesamte, im Punkt 13 reflektierte Licht durch das Objektiv 1 in ein Prallellichtbündel verwandelt, das zur Gänze innerhalb der Ausnehmung der Anordnung 5 verläuft. Tritt jedoch im Bereich des durch das Objektiv erzeugten Airy-Scheibchens eine Störung der Objektfläche 12 auf, so gelangt, wie leicht einzusehen, das gestreute oder das reflektierte Licht auch in den Bereich der Endflächen 7 der Lichtleitfasern 6. Sind diese, was ebenfalls über geeignete, zu einer Gruppe 16 zusammengefaßte, Lichtschalter möglich ist, mit einem oder mehreren Lichtdetektoren verbunden, so kann bei einer Bewegung der Objektfläche 12 in Richtung des eingezeichneten Pfeiles 18 jede Störung der Objektfläche mit großer Genauigkeit lokalisiert werden, da nur die in den Brennpunkt des Objektivs 1 gelangenden Störungen ein Lichtsignal zu den Lichtleitern 6 gelangen lassen. Zur schnellen punktweisen Abtastung kleinerer Bereiche oder von Teilbereichen ist es selbstverständlich auch möglich, anstelle einer bei 15 angeordneten, stationären punktförmigen Lichtquelle in diesem Bereich ein Abtastraster, beispielsweise nach Art eines Fernsehrasters, zu erzeugen, durch das in der Brennebene des Objektivs 1 ein entsprechend rasterförmig bewegtes Airy-Scheibchen erzeugt wird. Auf diese Weise ist es möglich, auch bei stationärer Objektfläche 12 eine Abtastung eines größeren Teilbereichs dieser Fläche zu bewirken. Durch geeignete Verknüpfung der jeweiligen, das Abtastraster bei 15 erzeugenden Ablenkspannungen mit den Ausgängen der Lichtleiter 6 ist es möglich, genaue Angaben über das Vorliegen und den Ort von Störungen im Bereich der abgetasteten Flächen zu erhalten. Durch selektive Verbindung einzelner Sektoren 17 mit dem nicht dargestellten Lichtdetektor ist es möglich, auch bei dieser Art der Beleuchtung Störungen, beispielsweise Linien oder Kanten mit einer bestimmten Richtung besonders deutlich hervorzuheben.

## Patentansprüche

1. Lichtleiteinrichtung für eine mit Auflicht betriebene Abbildungsvorrichtung, mit symmetrisch um die optische Achse eines abbildenden Elements in einem ringförmigen Bereich angeordneten, in einer Ebene liegenden Lichtleiterendflächen, dadurch gekennzeichnet, daß der ringförmige Bereich (5) bildseitig innerhalb des durch die Öffnungsblende des abbildenden Elements bestimmten Strahlenkegels längs der optischen Achse verschiebbar angeordnet ist.

2. Lichtleiteinrichtung nach Anspruch 1, dadurch gekennzeichnet, daß der ringförmige Bereich von Lichtleiter-Endflächen aus mehreren Teilbereichen (17) besteht, die konzentrisch und/oder sektorenförmig angeordnet sind und daß Mittel vorgesehen sind, um diese einzeln anzusteuern.

3. Lichtleiteinrichtung nach Anspruch 1 oder 2, dadurch gekennzeichnet, daß unmittelbar vor den Lichtleiter-Endflächen (7) eine Irisblende angeordnet ist, mit der die optisch wirksame Breite des ringförmigen Bereichs von Lichtleiter-Endflächen gesteuert werden kann.

4. Lichtleiteinrichtung nach einem der Ansprüche 1 bis 3, dadurch gekennzeichnet, daß die Lichtleiter (6) aus Glasfasern, Plastikfasern oder Faserbündeln bestehen.

5. Verfahren zum Betrieb der Lichtleiteinrichtung nach einem der Ansprüche 1 bis 4, dadurch gekennzeichnet, daß die Lichtleiter-Endflächen (7) in der hinteren Brennebene (21) des abbildenden optischen Elements (1) angeordnet werden und Licht zur Dunkelfeldbeleuchtung emittieren.

6. Verfahren zum Betrieb der Lichtleiteinrichtung nach einem der Ansprüche 1 bis 4, dadurch gekennzeichnet, daß die Lichtleiter-Endflächen (7) außerhalb der hinteren Brennebene (21) des abbildenden Elements (1) angeordnet werden und Licht emittieren, um einen Zwischenzustand zwischen Dunkelfeld-Beleuchtung und Hellfeld-Beleuchtung zu erzeugen.

7. Verfahren zum Betrieb der Lichtleiteinrichtung nach einem der Ansprüche 1 bis 4, dadurch gekennzeichnet, daß die Lichtleiter-Endflächen (7) in der hinteren Brennebene (21) des abbildenden Elements (1) angeordnet werden und zur Lichtaufnahme und Lichtweiterleitung an Photoempfänger dienen.

8. Verfahren nach Anspruch 7, dadurch gekennzeichnet, daß die Lichtleiter-Endflächen (7) Licht empfangen, das von einem durch das abbildende Element (1) punktförmig beleuchteten Objekt (12) reflektiert wird.

9. Mikroskop mit einer Lichtleiteinrichtung nach einem der Ansprüche 1 bis 4, dadurch gekennzeichnet, daß der ringförmige Bereich (5) zur Realisierung der Dunkelfeldbeobachtung innerhalb des Tubus (4) angeordnet ist.

10. Mikroskop mit Lichtleiteinrichtung nach einem der Ansprüche 1 bis 4, dadurch gekennzeichnet, daß die Lichtleiter-Endflächen (7) im Tubus (4) angeordnet sind und daß zur punktförmigen Beleuchtung des Objekts (12) eine bildseitig vom Okular (3) angeordnete Lichtquelle (15) mit vorgeschalteter Kondensorlinse (14) dient.

11. Mikroskop nach Anspruch 10, dadurch gekennzeichnet, daß Mittel zur rasterförmigen Führung des Beleuchtungspunktes (13) über das Objekt (12) vorgesehen sind.

12. Verwendung des Mikroskops nach Anspruch 10 oder 11 als Kantenfinder.

13. Verwendung des Mikroskops nach Anspruch 10 oder 11 zur Ausrichtung von Masken bei der Herstellung von integrierten Halbleiterschaltungen.

## Claims

1. Light conducting unit for a reflected light operated imaging device, with light conductor end faces that are arranged symmetrically round the optical axis of an imaging element in an annular area, and provided in one plane, characterized in that the annular area (5) is arranged on the image side within the light cone determined by the aperture of the imaging element, and shiftable along the optical axis.

2. Light conducting device as claimed in claim 1, characterized in that the annular area of light conductor end faces consists of several subareas (17) arranged concentrically and/or in sectors, and that means are provided to control them separately.

3. Light conducting device as claimed in claim 1 or 2, characterized in that immediately preceding the light conductor end faces (7) an iris stop is provided with which the optically effective with of the annular areas of light conductor end faces can be controlled.

4. Light conducting device as claimed in any one of claims 1 to 3, characterized in that the light conductors (6) consist of glass fibers, synthetic fibers, or fiber bundles.

5. Method of operating the light conducting device as claimed in any one of claims 1 to 4, characterized in that the light conductor end faces (7) are arranged in the rear focal plane (21) of the imaging optical element (1), and that they emit light for dark field illumination.

6. Method of operating the light conducting device as claimed in any one of claims 1 to 4, characterized in that the light conductor end faces (7) are arranged outside the rear focal plane (21) of the imaging element (1), and that they emit light to generate a state of transistion between dark field illumination and bright field illumination.

7. Method of operating the light conducting device as claimed in any one of claims 1 to 4, characterized in that the light conductor end faces (7) are arranged in the rear focal plane (21) of the imaging element (1), and that they are used to receive light and propagate it to photoreceivers.

8. Method as claimed in claim 7, characterized in that the light conductor end faces (7) receive light which is reflected from an object (12) illuminated spotwise through the imaging element (1).

9. Microscope with a light conducting device as claimed in any one of claims 1 to 4, characterized in that the annular area (5) is arranged within the tube (4) to realize the dark field observation.

10. Microscope with light conducting device as claimed in any one of claims 1 to 4, characterized in that the light conductor end faces (7) are arranged in the tube (4), and that for the spot-wise illumination of the object (12) a light source (15) arranged on the image side of the ocular (3) is used, with a preceding condensor lens (14).

11. Microscope as claimed in claim 10, characterized in that means are provided to guide the point of illumination (13) over the object (12) in raster form.

12. Use of the microscope as claimed in claims 10 or 11 as an edge detector.

13. Use of the microscope as claimed in claim 10 or 11 to align masks in the production of integrated semiconductor circuits.

## Revendications

1. Ensemble de conduction de lumière pour un dispositif de reproduction utilisant de la lumière réfléchie, avec des surfaces terminales de conduction de lumière disposées symétriquement autour de l'axe optique d'un élément de reproduction dans une région annulaire et situées dans un même plan, caractérisé en ce que la région annulaire (5) est disposée, du côté image, à l'intérieur du cône de lumière défini par le diaphragme d'ouverture de l'élément de reproduction de manière à pouvoir être déplacé le long de l'axe optique.

2. Ensemble de conduction de lumière selon la revendication 1, caractérisé en ce que la région annulaire des surfaces terminales de conduction de lumière comporte plusieurs régions partielles (17) qui sont disposées de façon concentrique et/ou en secteurs, et en ce qu'il est prévu des moyens pour commander celles-ci individuellement.

3. Ensemble de conduction de lumière selon la revendication 1 ou 2, caractérisé en ce qu'un diaphragme iris précèdant immédiatement les surfaces terminales de conduction de lumière (7) permet de commander la largeur optiquement efficace de la région annulaire des surfaces terminales de conduction de lumière.

4. Ensemble de conduction de lumière selon l'une des revendications 1 à 3, caractérisé en ce que le conducteur de lumière (6) est en fibre de verre, en fibre synthétique ou en faisceaux de fibres.

5. Procédé pour la mise en oeuvre d'un ensemble de conduction de lumière selon l'une des revendications 1 à 4, caractérisé en ce que les surfaces terminales de conduction de lumière (7) sont disposées dans le plan focal arrière (21) de l'élément de reproduction optique (1), et émettent de la lumière pour l'illumination à champ foncé.

6. Procédé pour la mise en oeuvre de l'ensemble de conduction de lumière selon l'une des revendications 1 à 4, caractérisé en ce que les surfaces terminales de conduction de lumière (7) sont disposées à l'extérieur du plan focal arrière (21) de l'élément de reproduction (1) et émettent de la lumière pour obtenir un état intermédiaire entre l'illumination à champ foncé et l'illumination à champ clair.

7. Procédé pour le fonctionnement d'un ensemble de conduction de lumière selon l'une des revendications 1 à 4, caractérisé en ce que les surfaces terminales de conduction de lumière (7) sont disposées dans le plan focal arrière (21) de l'élément de reproduction (1), et servent à recevoir et propager la lumière à des photorécepteurs.

8. Procédé selon la revendication 7, caractérisé en ce que les surfaces terminales de conduction de lumière (7) reçoivent de la lumière réfléchie par un objet (12) illuminé ponctuellement par l'élément de reproduction (1).

9. Microscope comportant un ensemble de conduction de lumière selon l'une des revendications 1 à 4, caractérisé en ce que la région annulaire (5) est disposée à l'intérieur du tube (4) pour permettre l'observation à champ foncé.

10. Microscope comportant un ensemble de conduction de lumière selon l'une des revendications 1 à 4, caractérisé en ce que les surfaces terminales de conduction de lumière (7) sont disposées dans le tube (4), et en ce qu'une source de lumière (15) précédée par une lentille de condensation (14) et disposée du côté image de l'oculaire (3) est utilisée pour illuminer ponctuellement l'objet (12).

11. Microscope selon la revendication 10, caractérisé en ce qu'il est prévu des moyens pour déplacer le point d'illumination (13) sur l'objet (12) par trame.

12. Utilisation du microscope selon la revendication 10 ou 11 comme détecteur de bords.

13. Utilisation du microscope selon la revendication 10 ou 11 pour l'alignement de masques lors de la fabrication de circuits semi-conducteurs intégrés.

FIG. 1

FIG. 2